# EUROPÄISCHE PATENTSCHRIFT

(11) **EP 1 987 378 B1**
(45) Veröffentlichungstag und Bekanntmachung des Hinweises auf die Patenterteilung: **20.07.2011**
(21) Anmeldenummer: 07711450.2
(22) Anmeldetag: 06.02.2007
(51) Int. Cl.: G02B 1/12, G02C 11/08

(54) **KRAFTFESTE ENTSPIEGELTE OBERFLÄCHE MIT ANTIFOG-EIGENSCHAFTEN**
SCRATCH RESISTANT, REFLECTION REDUCING SURFACE HAVING ANTI-FOG PROPERTIES
SURFACE ANTIREFLET RESISTANT AUX ERAFLURES ET A PROPRIETES ANTIBUEE

(30) Priorität: 24.02.2006 DE 102006008784
(43) Veröffentlichungstag der Anmeldung: 05.11.2008
(73) Patentinhaber: Rodenstock GmbH, 80469 München (DE); Fraunhofer-Gesellschaft zur Förderung der angewandten Forschung e.V., 80686 München (DE)
(72) Erfinder: SCHERG, Gerd-Peter, 85598 Balcham (DE); STOLZ, Cécile, 6020 Innsbruck (AT); GÖTZ, Bärbel, 86519 Augsburg (DE); KAISER, Norbert, 07745 Jena (DE); SCHULZ, Ulrike, 07751 Jena (DE)
(74) Vertreter: Müller-Boré & Partner Patentanwälte
(86) Internationale Anmeldenummer: PCT/EP2007/001013
(87) Internationale Veröffentlichungsnummer: WO 2007/098843

(56) Entgegenhaltungen:
- JP-A- 9 127 302
- JP-A- 11 084 102
- JP-A- 2000 075 104
- JP-A- 2003 043 207

## Beschreibung

Die vorliegende Erfindung betrifft ein optisches Element oder Bauteil mit ausgezeichnetem Antifog-Effekt bzw. Antibeschlagseffekt, welches darüber hinaus eine ausgezeichnete Kratzfestigkeit und/oder Entspiegelungswirkung aufweist und sogar hydrophobe und/oder oleophobe Eigenschaften aufweisen kann, und ein Verfahren zu dessen Herstellung.

Im Stand der Technik sind Verfahren bekannt, beschlagfreie Oberflächen durch Aufbringen einer wasseraufnehmenden bzw. hydrophilen Schicht (vgl. JP 2001097744 A2, JP 2003206435 A2, EP 0 782 015 B1 oder JP 2001074902 A2) oder einer hydrophoben TopCoat-Schicht (vgl. EP 0 927 144 B1) zu realisieren. Ferner sind Verfahren bekannt, das Beschlagen von Oberflächen durch eine photokatalytische Schicht (US-A-6,013,372), durch Beheizen (US-A-5,471,036), durch Modifizieren eines Polymersubstrats unter Zugabe eines Additivs (WO 01/58987 A2) oder durch ein Oxidsystem ohne organische Komponente (US 2002/0192365 A1) zu verhindern. Darüber hinaus gibt es Bemühungen, gleichzeitig einen Antireflex- und Antibeschlagseffekt bzw. Antifogeffekt zu realisieren (vgl. US 2004/0201895 A1, US 2003/0030909 A1, EP 1 324 078 oder EP 0 871 046 A1). Den meisten im Stand der Technik bekannten Verfahren zur Erzeugung eines Antifog-Effekts ist gemeinsam, daß entweder eine flächige Schicht aus einem beschlagmindernden Material auf eine Oberfläche aufgebracht wird oder Additive zugesetzt werden, die einen beschlagmindernden Effekt aufweisen. Die geringe Kratzfestigkeit üblicher wasseraufnehmender Lacke schränkt den Gebrauch derartiger Oberflächen jedoch ein.

JP-2000-075104 A bzw. JP 11-084102 beschreiben Verfahren zur Herstellung von optischen Elementen, umfassend die Schritte: (a) Bereitstellen eines Glassubstrats, (b) Aufbringen einer wasseraufnehmenden Schicht und (c) Aufbringen einer zweiten Schicht auf Basis eines porösen anorganischen Oxids oder Fluorids. In JP 11-084102 ist angeführt, daß eine Porösität von 20% - 80% durch Herstellung im Vakuum erreicht wird.

Die der vorliegenden Erfindung zugrundeliegende technische Aufgabe besteht somit darin, optische Elemente bzw. Bauteile, insbesondere Brillengläser, mit Antifog-Effekt bereitzustellen, welche eine ausgezeichnete Kratzfestigkeit und/oder Entspiegelungswirkung aufweisen sollen und, wenn möglich, sogar hydrophobe und/oder oleophobe Eigenschaften aufweisen sollen.

Diese Aufgabe wird durch Bereitstellen der in den Ansprüchen gekennzeichneten Ausführungsformen gelöst.

Insbesondere wird gemäß der vorliegenden Erfindung ein optisches Element bzw. Bauteil bereitgestellt, umfassend in der nachfolgenden Reihenfolge ein Glassubstrat, eine wasseraufnehmende erste Schicht und eine zweite Schicht, bestehend aus einer Antireflexbeschichtung, dadurch, gekennzeichnet, daß in die zweite Schicht und die wasseraufnehmende erste Schicht Sacktöcher eingebracht sind, welche ausgehend von der zweiten Schicht eingebracht sind und die zweite Schicht vollständig durchdringen und zumindest teilweise in die wasseraufnehmende erste Schicht eindringen, wobei die Antireflexbeschichtung derart aufgebracht ist, daß eine verdichtete Schicht mit einer Porosität von weniger als 20% gebildet wird.

Zwischen der ersten und der zweiten Schicht können ferner verschiedene Schichtmaterialien angeordnet werden, um beispielsweise zwischen der wasseraufnehmenden inneren Schicht und der harten äußeren Schicht einen Übergang bzw. eine verbesserte Kompatibilität zu schaffen, d.h. es können sogenannte Ausgleichsschichten vorgesehen werden. Geeignete Materialien für eine derartige Schicht sind beispielsweise Kunststoffe und/oder Oxide.

Gemäß einer besonders bevorzugten Ausführungsform der vorliegenden Erfindung ist das optische Element bzw. Bauteil ein Brillenglas.

Die in die zweite Schicht, bestehend aus einer Antreflexbeschichtung, und die wasseraufnehmende Schicht eingebrachten sackartigen Vertiefungen bzw. Bohrungen bzw. Sacklöcher bzw. Kanäle, welche ausgehend von der zweiten Schicht eingebracht sind und diese vollständig durchdringen und zumindest teilweise in die wasseraufnehmende Schicht eindringen, unterliegen grundsätzlich keiner besonderen Beschränkung hinsichtlich ihrer Form und Dimension. Diese Sacklöcher werden ausgehend von der zweiten Schicht oder einer darauf gegebenenfalls aufgebrachten weiteren Schicht durch mechanische Mittel, durch Wärmeeinwirkung oder durch Strahlungs- oder Lasereinwirkung eingebracht bzw. gebohrt und durchdringen die zweite Schicht vollständig und dringen zumindest teilweise in die wasseraufnehmende Schicht ein. Es ist jedoch bevorzugt, daß die Sacklöcher die wasseraufnehmende Schicht - in der Dickenrichtung - nicht vollständig durchdringen, sondern innerhalb der wässeraufnehmenden Schicht enden. Vorzugsweise durchdringen die Sacklöcher die wasseraufnehmende Schicht - in der Dickenrichtung - nicht vollständig, sondern enden, bezogen auf die Dicke der wasseraufnehmenden Schicht, in der wasseraufnehmenden Schicht in einer Tiefe von 5 bis 80%, besonders bevorzugt 5 bis 40%.

Die Antireflexbeschichtung als die zweite Schicht kann einen ein- oder mehrschichtigen Aufbau aufweisen. Derartige ein- oder mehrschichtig aufgebaute Antireflexbeschichtungen sind einem Fachmann bekannt und ein Fachmann ist in der Lage, geeignete Materialien und Schichtdicken einer Antireflexbeschichtung bzw. der einzelnen Antireflexschichten in geeigneter Weise auszuwählen. Vorzugsweise wird eine Antireflexbeschichtung mit einem ein-, zwei-, drei, vier-, fünf oder sechsschichtigen Aufbau gewählt. Bei Antireflextieschichtungen mit einem zwei- oder mehrschichtigen Aufbau wird üblicherweise eine derartige Schichtabfolge gewählt, bei der an eine Antireflexschicht mit einem niedrigen Brechungsindex eine Antireflexschicht mit einem hohen Brechungsindex angrenzt. In anderen Worten ist es für einen derartigen mehrschichtigen Aufbau bevorzugt, daß sich Antireflexschichten mit einem niedrigen Brechungsindex und Antireflexschichten mit einem hohen Brechungsindex alternierend abwechseln. Zusätzlich können weitere Schichten, beispielsweise Haftschichten (z.B. mit einer Dicke in einem Bereich von ca. 5 nm bis 5 µm), die keine optische Funktion aufweisen müssen, jedoch für die Beständigkeit, Haftungseigenschaften, Klimabeständigkeit, etc., vorteilhaft sein können, vorgesehen werden.

Beispiele für geeignete Materialien für die Antireflex beschichtung schließen Metalle, Nichtmetalle, wie Silicium oder Bor, Oxide, Fluoride, Silicide, Boride, Carbide, Nitride und Sulfide von Metallen und den vorstehenden Nichtmetallen ein. Diese Substanzen können einzeln oder als Gemisch von zwei oder mehreren dieser Materialien verwendet werden.

Bevorzugte Metall- bzw. Nichtmetalloxide schließen SiO, SiO₂, ZrO₂, Al₂O₃, TiO, TiO₂, Ti₂O₃, Ti₃O₄, CrOₓ (mit x = 1-3), wie Cr₂O₃, Y₂O₃, Yb₂O₃, MgO, Ta₂O₅, CeO₂ und HfO₂ ein.

Bevorzugte Fluoride schließen MgF₂, AlF₃, BaF₂, CaF₂, Na₃AlF₆ und Na₅Al₃F₁₄ ein.

Bevorzugte Metalle schließen beispielsweise Cr, W, Ta und Ag ein.

Es ist besonders bevorzugt, für die letzte bzw. äußerste (ausgehend von der Oberfläche des optischen Elements bzw. Bauteils betrachtet) Antireflexschicht, d.h. die Antireflexschicht, welche mit einer gegebenenfalls vorgesehenen hydrophoben und/oder oleophoben Beschichtung, wie nachstehend erläutert, in Kontakt stehen kann, SiO₂ als Material zu verwenden.

Die vorstehend beschrieben Antireflex beschichtung kann durch übliche Verfahren aufgebracht werden, wobei es bevorzugt ist, die einzelnen Antireflexschichten durch Aufdampfen, Sputtern, CVD- oder plasmagestützte CVD-Verfahren aufzubringen. Erfindungsgemäß wird die Antireflexbeschichtung, beispielsweise durch plasmaionengestütztes Aufdampfen, derart abgesechieden bzw. aufgebrecht, daß eine verdichtete Schicht mit einer hohen Abriebfestigkeit, d.h. mit einer Porosität von weniger als 20%, gebildet wird.

Die Schichtdicke der Antireflexbeschichtung mit einem ein- oder mehrschichtigen Aufbau unterliegt grundsätzlich keiner besonderen Beschränkung. Sie wird jedoch vorzugsweise auf eine Dicke von ≤ 2000 nm, vorzugsweise ≤ 1500 nm, besonders bevorzugt ≤ 300 nm, eingestellt. Die Mindestschichtdicke der Antireflexbeschichtung liegt jedoch vorzugsweise bei etwa ≥ 100 nm. Bei einem mehrschichtigen Aufbau der Antireflex beschichtung wird die Dicke jeder einzelnen Schicht (d.h. Antireflexschicht) wie vorstehend angegeben in geeigneter Weise eingestellt

Beispielsweise kann eine solche Antireflexbeschichtung aus abwechselnden hoch- bzw. niederbrechenden Schichten aus TiO₂ bzw. SiO₂ aufgebaut sein, mit beispiels-weise λ/8-TiO₂, λ/8-SiO₂, λ/2-SiO₂ und λ/4-SiO₂, wenn λ für Licht mit der Wellenlänge von 550 nm steht. Eine derartige Antireflexbeschichtüng mit Mehrfachschichtenaufbau kann beispielsweise mittels bekannter PVD-Verfahren erzeugt werden.

Die wasseraufnehmende Schicht ist eine Schicht, welche geeignet ist, durch die in der Antireflex beschichtung oder in der die Oberfläche härtende Deckschicht vorgesehenen Sacklöcher bzw. Kanäle Feuchtigkeit aus der Luft aufzunehmen, um so ein Beschlagen der Glasoberfläche zu verhindern. Die wasseraufnehmende Schicht ist daher hauptsächlich aus einem hydrophilen Material, welches anorganischer oder organischer Natur sein kann, aufgebaut.

Die wasseraufnehmende Schicht ist vorzugsweise eine wasseraufnehmende Polymerschicht und kann beispielsweise ein sogenannter Antifog-Lack sein. Geeignete Materialien für die wasseraufnehmende Polymerschicht schließen natürliche Polymere, wie Stärke-Polymere, wie Hydrolysate von Stärke-Acrylnitril-Pfropfpolymeren, und Cellulosepolymere, wie Cellulose-Acrylnitril-Pfropfpolymere, und synthetische Polymere, wie Polyvinylalkohol-Polymere, wie vernetzter Polyvinylalkohol, Acrylpolymere, wie vernetztes Natriumpolyacrylat, und Polyether-Polymere, wie vernetztes Polyethylenglycoldiacrylat, ein, wobei Polyacrylate und Polyvinylalkohol bevorzugt sind. Beispiele für Polyacrylate sind Polyacrylsäure, Polymethacrylsäure, Polyacryl-amid und Salze, wie Kaliumpolyacrylat, Natriumpolyacrylat, etc., davon. Geeignete Materialien für die wasseraufnehmende Schicht sind beispielsweise die in EP 0 871 046 A1 beschriebenen Polymere.

Die Schichtdicke der wasseraufnehmenden Schicht unterliegt grundsätzlich keiner besonderen Beschränkung. Sie wird jedoch vorzugsweise auf eine Dicke von 0,5 bis 12 µm, besonders bevorzugt 5 bis 10 µm, eingestellt.

Die in die zweite Schicht und die wasseraufnehmende Schicht eingebrachten Sacklöcher bzw. Kanäle unterliegen keiner wesentlichen Beschränkung. Sie weisen jedoch vorzugsweise einen Durchmesser in einem Bereich von 0,1 µm bis 10 µm, besonders bevorzugt in einem Bereich von 0,1 bis 5 µm, auf. Die Sacklöcher können dabei beispielsweise im wesentlichen rund oder ellipsenförmig gestaltet sein. Die Tiefe bzw. Länge der eingebrachten Sacklöcher variiert in Abhängigkeit der gewählten Dicken der zweiten Schicht und der wasseraufnehmenden Schicht. Üblicherweise sind die Sacklöcher bei Betrachtung der Oberfläche des optischen Elements oder Bauteils mit bloßem Auge nicht sichtbar.

Der Abstand von Sacklochmitte zu Sacklochmitte (Pitch), d.h. zweier zueinander benachbarter bzw. angrenzender Sacklöcher, bezogen auf die Oberfläche der zweiten Schicht beträgt vorzugsweise von 20 µm bis 1 mm, besonders bevorzugt von 30 µm bis 0,5 mm. Die Sacklöcher nehmen vorzugsweise weniger als 30%, besonders bevorzugt weniger als 10%, der Oberfläche der zweiten Schicht ein. Mit anderen Worten, die Dichte bzw. Bedeckung der Sacklöcher bzw. Kanäle liegt üblicherweise im Bereich von 100 bis 250000/cm², besonders bevorzugt in einem Bereich von 400 bis 100000/cm².

Die Art und Weise, wie diese Sacklöcher in die zweite Schicht und mindestens teilweise in die wasseraufnehmeride Schicht eingebracht werden, unterliegt keiner besonderen Beschränkung. Es ist jedoch bevorzugt, die Sacklöcher im wesentlichen senkrecht zu der Oberfläche des optischen Elements oder Bauteils einzubringen bzw. vorzusehen.

Das Glassubstrat für das erfindungsgemäße optische Element bzw. Bauteil, welches vorzugsweise ein Brillenglas ist, kann aus einem Kunststoff oder einem anorganischen Material aufgebaut sein. Als Glassubstrat kann ein behandeltes oder unbehandeltes Kunststoffglas, beispielsweise aus Polythiourethan, PMMA, Polycarbonat, Polyacrylat oder Polydiethylenglycolbisallylcarbonat (CR 39^{®}), oder ein behandeltes oder unbehandeltes Mineralglas verwendet werden.

In einer Ausführungsform der vorliegenden Erfindung kann zwischen dem Glassubstrat und der wasseraufnehmenden Schicht eine Hartschicht vorgesehen werden, in welche dann die vorstehenden Sacklöcher nicht eindringen, d.h. die Hartschicht bleibt von den Sacklöchern unberührt. In einer weiteren Ausführungsform der vorliegenden Erfindung kann zwischen der wasseraufnehmenden Schicht und der Antireflex beschichtung eine Hartschicht vorgesehen werden. Bevorzugte Schichtaufbauanordnungen des erfindungsgemäßen optischen Elements oder Bauteils sind demgemäß

Glassubstrat/Hartschicht/wasseraufnehmende Schicht/Antireflexbeschichtung bzw.

Glassubstrat/wasseraufnehmende Schicht/Hartschicht/Antireflexbeschichtung bzw.

Glassubstrat/Hartschicht/wasseraufnehmende

Schicht/Hartschicht/Antireftexbeschichtung.

Die Hartschicht, welche auch als auf der wasseraufnehmenden ersten Schicht direkt angeordnete zweite Schicht vorgesehen werden kann, wie vorstehend ausgeführt, unterliegt keiner besonderen Beschränkung. Die Hartschicht kann einen ein- oder mehrschichtigen Aufbau aufweisen. Zur Herstellung der Hartschicht können verschiedene Materialien und Verfahren eingesetzt werden. Ein Fachmann ist in der Lage, geeignete Materialien für die Hartschicht und die Dicke der Hartschicht in geeigneter Weise auszuwählen. Üblicherweise wird die Hartschicht in der Form eines Hartlackes oder eines anorganischen Materials, insbesondere auf Quarzbasis, mittels plasmaunterstützter Aufdampftechniken oder CVD-Verfahren aufgebracht. Das Aufbringen eines Hartlackes erfolgt in der Regel mittels üblicher Verfahren, wie ein Tauchverfahren, ein Sprühverfahren oder ein Spincoatverfahren. Es ist jedoch bevorzugt, eine Hartschicht auf Basis eines Acrylpolymers, eines Urethanpolymers, eines Melaminpolymers, eines Silikonharzes oder eines anorganischen Materials, insbesondere auf Quarzbasis, zu verwenden. Gemäß einer besonders bevorzugten Ausführungsform wird ein Silikonharz als Hartschicht auf die Oberfläche des optischen Elements bzw. Bauteils aufgebracht, beispielsweise ausgehend von Siloxanen. Die Hartschicht kann dabei vollständig oder bereichsweise oberhalb der wasseraufnehmenden Polymerschicht angeordnet sein.

Geeignete Silikonharze weisen eine Zusammensetzung auf, die eine oder mehrere der nachfolgenden Komponenten umfaßt:
(1) Organosiloxanverbindungen mit oder ohne funktionelle(n) Gruppen, wie Glycidoxypropyltrimethoxysilan,
(2) Co-Reaktanten für funktionelle Gruppen funktionaler Organosilane, wie organische Epoxide, Amine, organische Säuren, organische Anhydride, Imine, Amide, Ketamine, Acrylverbindungen und Isocyanate,
(3) kolloidales Siliciumdioxid, Sole und/oder Metall- und Nichtmetalloxidsole, die vorzugsweise einen durchschnittlichen Teilchendurchmesser von etwa 1 bis etwa 100 nm und besonders bevorzugt etwa 5 nm bis etwa 40 nm aufweisen,
(4) Katalysatoren für die Silanol-Kondensation, wie Dibutylzinndilaurat, Zinknaphthenat, Aluminiumacetylacetonat, Zirkoniumoctoat, Blei-2-ethylhexoat, Aluminiumalkoxide und Aluminiumalkoxid-OrganoSilikonderivate und Titanacetylacetonat,
(5) Katalysatoren für Co-Reaktanten, wie Epoxy-Katalysatoren und Katalysatoren vom freien-Radikal-Typ,
(6) Lösungsmittel, wie Wasser, Alkohole und Ketone,
(7) grenzflächenaktive Mittel, wie fluorierte grenzflächenaktive Mittel oder grenzflächenaktive Mittel vom Polydimethylsiloxan-Typ,
(8) andere Additive, wie Füllstoffe. Derartige Materialien sind beispielsweise in EP 0 871 907 B1, vgl. die Abschnitte [0023] bis [0026], beschrieben.

Die Schichtdicke der Hartschicht unterliegt grundsätzlich keiner besonderen Beschränkung. Sie wird jedoch vorzugsweise auf eine Dicke von ≤ 20 µm, mehr bevorzugt 1 bis 15 µm, besonders bevorzugt 1 bis 5 µm, eingestellt.

Ferner kann auf die zweite Schicht, bestehend aus einer Antireflexbeschichtung, eine hydrophobe und/oder oleophobe Beschichtung aufgebracht werden. In diesem Fall ist dann auch diese hydrophobe und/oder oleophobe Beschichtung von den vorstehend definierten Sacklöchern erfindungsgemäß perforiert. Geeignete hydrophobe und/oder oleophobe Beschichtungen sind einem Fachmann bekannt und unterliegen grundsätzlich keiner besonderen Beschränkung, solange eine Beschichung mit hydrophoben und/oder oleophoben Eigenschaften resultiert, die ausreichend gute Haftungseigenschaften aufweist, wie beispielsweise Materialien auf Silanbasis.

Die hydrophobe und/oder oleophobe Beschichtung umfaßt vorzugsweise ein Silan mit mindestens einer Fluor-enthaltenden Gruppe, die vorzugsweise mehr als 20 Kohlenstoffatome aufweist. Sie kann jedoch auch aus einem entsprechenden Siloxan oder Silazan aufgebaut sein, das vorzugsweise mindestens eine Fluor-enthaltende Gruppe umfaßt. Das Silan mit mindestens einer Fluor-enthaltenden Gruppe basiert vorzugsweise auf einem Silan mit mindestens einer hydrolysierbaren Gruppe. Geeignete hydrolysierbare Gruppen unterliegen keiner besonderen Beschränkung und sind einem Fachmann bekannt. Beispiele für an ein Siliziumatom gebunde hydrolysierbare Gruppen sind Halogenatome, wie Chlor, -N-Alkylgruppen, wie -N(CH₃)₂ oder -N(C₂H₅)₂, Alkoxygruppen oder Isocyanatgruppen, wobei eine Alkoxygruppe, insbesondere eine Methoxygruppe oder Ethoxygruppe, als hydrolysierbare Gruppe bevorzugt ist. Es ist jedoch auch möglich, ein Silan mit mindestens einer Fluor-enthaltenden Gruppe zu verwenden, das mindestens eine Hydroxylgruppe trägt. Das Silan mit mindestens einer Fluor-enthaltenden Gruppe umfaßt vorzugsweise eine oder mehrere polyfluorierte Gruppe(n) oder eine oder mehrere per-fluorierte Gruppe(n), wobei eine oder mehrere polyfluorierte oder perfluorierte Alkylgruppe(n), eine oder mehrere polyfluorierte oder perfluorierte Alkenylgruppe(n) und/oder eine oder mehrere polyfluorierte oder perfluorierte Polyethereinheiten-enthaltende Gruppe(n) besonders bevorzugt sind. Bevorzugte Polyethereinheiten-enthaltende Gruppen umfassen eine oder mehrere -(CF2)ₓO-Einheit(en) mit x = 1 bis 10, wobei x = 2 bis 3 besonders bevorzugt ist.

Gemäß einer bevorzugten Ausführungsform der vorliegenden Erfindung weist das Silan eine Fluor-enthaltende Gruppe und drei hydrolysierbare Gruppen oder Hydroxylgruppen auf. Ferner kann es bevorzugt sein, daß die hydrophobe und/oder oleophobe Beschichtung aus einer poly- oder perfluorierten Kohlenwasserstoffverbindung aufgebaut ist. Die poly- oder perfluorierte Kohlenwasserstoffverbindung unterliegt keiner wesentlichen Beschränkung. Es ist jedoch bevorzugt Polytetrafluor-ethylen als poly- oder perfluorierte Kohlenwasserstoffverbindung zu verwenden. Die hydrophobe und/oder oleophobe Beschichtung ist vorzugsweise ausschließlich aus einem Silan mit mindestens einer Fluor-enthaltenden Gruppe oder einer poly- oder perfluorierten Kohlenwasserstoffverbindung aufgebaut. Es ist jedoch auch möglich, ein Gemisch aus einem oder mehreren dieser Silan(e) und/oder einer oder mehreren poly- oder perfluorierten Kohlenwasserstoffverbindung(en), gegebenenfalls mit weiteren anorganischen, metallorganischen oder organischen Hilfsstoffen für die hydrophobe und/oder oleophobe Beschichtung, zu verwenden. Die hydrophobe und/oder oleophobe Beschichtung kann durch übliche Verfahren aufgebracht werden, wobei es bevorzugt ist, diese Beschichtung durch Aufdampfen, CVD-Verfahren oder durch ein Tauchverfahren aufzubringen. Die Schichtdicke der hydrophoben und/oder oleophoben Beschichtung unterliegt grundsätzlich keiner besonderen Beschränkung. Sie wird jedoch vorzugsweise auf eine Dicke von ≤ 50 nm, vorzugsweise ≤ 20 nm, eingestellt.

Die Härte der in dem erfindungsgemäßen optischen Element bzw. Bauteil verwendeten Materialien zum Aufbau der einzelnen Schichten wird üblicherweise derart ausgewählt, daß sie vorzugsweise in der nachfolgenden Reihenfolge zunimmt:
Material für die wasseraufnehmende Schicht < Silikonlack < im Vakuumverfahren erzeugte Deckschichten.

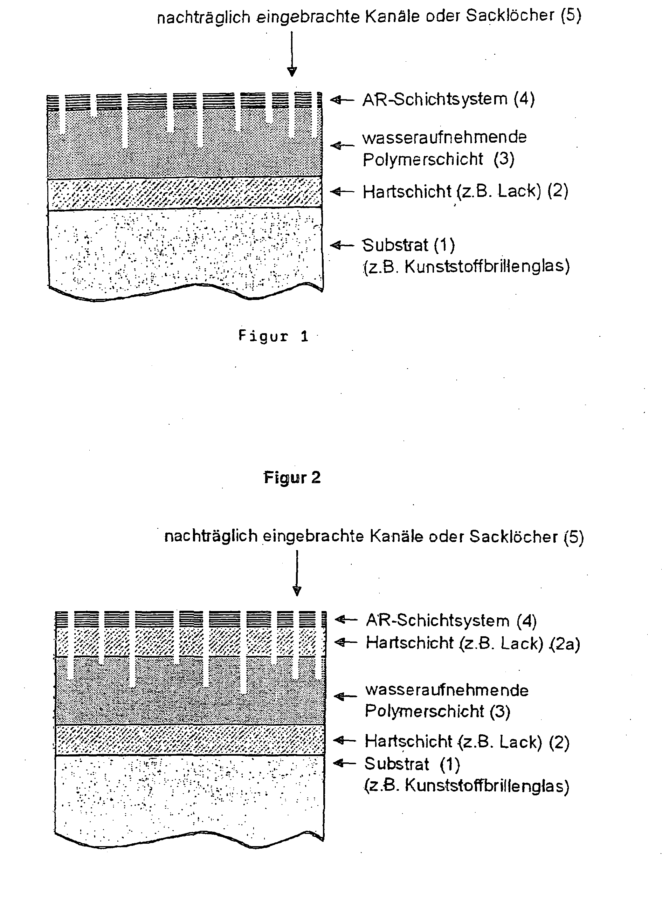

Figur 1 zeigt eine Ausführungsform des erfindungsgemäßen Brillenglases, umfassend ein Glassubstrat (1), eine Hartschicht (2) (als optionale Schicht), eine wasseraufnehmende Schicht (3) und eine Antireflexbeschichtung (4), wobei in die Antireflexbeschichtung (4) und die wasseraufnehmende Schicht (3) Sacklöcher (5) eingebracht sind, welche ausgehend von der Antireflexbeschichtung (4) - in Richtung des in Figur 1 abgebildeten Pfeils - eingebracht sind und die Antireflexbeschichtung (4) vollständig durchdringen und zumindest teilweise in die wasseraufnehmende Schicht (3) eindringen und in der wasseraufnehmenden Schicht (3) enden.
Figur 2 zeigt eine weitere Ausführungsform des erfindungsgemäßen Brillenglases, umfassend ein Glassubstrat (1), eine Hartschicht (2) (als optionale Schicht), eine wasseraufnehmende Schicht (3), eine weitere Hartschicht (2a) und eine Antireflexbeschichtung (4), wobei in die Antireflexbeschichtung (4), die weitere Hartschicht (2a) und die wasseraufnehmende Schicht (3) Sacklöcher (5) eingebracht sind, welche ausgehend von der Antireflexbeschichtung (4) - in Richtung des in Figur 2 abgebildeten Pfeils - eingebracht sind und die Antireflexbeschichtung (4) sowie die Hartschicht (2a) vollständig durchdringen und zumindest teilweise in die wasseraufnehmende Schicht (3) eindringen und in der wasseraufnehmenden Schicht (3) enden.

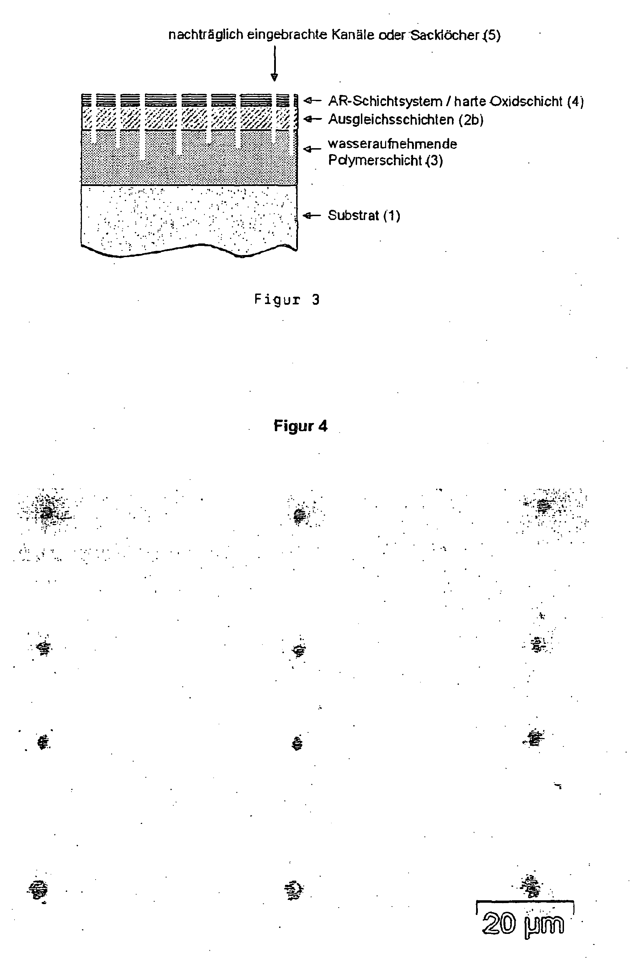

Figur 3 zeigt eine weitere Ausführungsform des erfindungsgemäßen Brillenglases, umfassend ein Glassubstrat (1), eine wasseraufnehmende Schicht (3), Ausgleichsschichten (2b) und eine härtende Deckschicht (4), welche aus einer AR-Beschichtung und einer oder mehreren harten Oxidschichten aufgebaut ist, wobei in die härtende Deckschicht (4), die Ausgleichsschichten (2b) und die wasseraufnehmende Schicht (3) Sacklöcher bzw. Kanäle (5) eingebracht sind, welche ausgehend von der härtenden Deckschicht (4) - in Richtung des in Figur 3 abgebildeten Pfeils- eingebracht sind und die härtende Deckschicht (4) sowie die Ausgleichsschichten (2b) vollständig durchdringen und zumindest teilweise in die wasseraufnehmende Schicht (3) eindringen und in der wasseraufnehmenden Schicht (3) enden.
Figur 4 zeigt eine lichtmikroskopische Aufnahme der Probehobeffläche eines erfindungsgemäßen Brillenglases mit punktförmigen Sacklöchern, die zueinander in einem Gittermuster beabstandet vorgesehen sind und etwa einen Abstand von 20 bis 50 µm zueinander aufweisen.

Ferner wird gemäß der vorliegenden Erfindung ein Verfahren zur Herstellung eines optischen Elements bzw. Bauteils, vorzugsweise eines Brillenglases, bereitgestellt, umfassend in der nachfolgenden Reihenfolge die Schritte:
(a) Bereitstellen eines Glassubstrats,
(b) Aufbringen einer wasseraufnehmenden Schicht,
(c) Aufbringen einer zweiten Schicht, bestehend aus einer Antireflexbeschichtung, und
(d) derartiges bereichsweises Einbringen von Sacklöchern bzw. Kanälen in die zweite Schicht und in die wasseraufnehmende Schicht, ausgehend von der zweiten Schicht, daß die zweite Schicht vollständig durchdrungen wird und die Sacklöcher zumindest teilweise in die wasseraufnehmende Schicht eindringen,
   und wobei die Antireflexbeschichtung derart aufgebracht wird, daß eine verdichtete Schicht mit einer Porosität von weniger als 20% gebildet wird.

Das Verfahren, mit dem die Sacklöcher in die zweite Schicht und die wässeraufnehmende Schicht eingebracht werden, unterliegt keiner besonderen Beschränkung. Es ist jedoch bevorzugt, die Sacklöcher, ausgehend von der zweiten Schicht, durch Laserbeschuß, Sandstrahlbehandlung, Elektronenstrahl-Lithographie, lonenstrahl-Bearbeitung, Ultraschallbeschuß oder einen Wasserstrahl in die zweite Schicht und zumindestens teilweise in die wasseraufnehmende Schicht einzubringen. Beispielsweise kann die zweite Schicht, bezogen auf deren Oberfläche, durch eines der vorstehend genannten Verfahren bereichsweise bzw. punktweise perforiert bzw. durchlöchert und in der Dickenrichtung vollständig durchdrungen werden, um die wasseraufnehmende Schicht bereichsweise bzw. punktweise freizulegen. In die wasseraufnehmende Schicht werden zumindest bereichsweise Sacklöcher bzw. Kanäle eingebracht, um die wasserabsorbierende Wirkung sicherzustellen. Es ist jedoch nicht notwendig, die gesamte wasserabsorbierende Schicht zu durchbohren.

Vorzugsweise werden die Sacklöcher im wesentlichen senkrecht zu der Oberfläche des optischen Elements bzw. Bauteils eingebracht bzw. vorgesehen. Es ist jedoch auch möglich, ausgehend von der äußersten Schicht, d.h. der Antireflex beschichtung oder gegebenenfalls der darauf angeordneten hydrophoben und/oder oleophoben Beschichtung, in einem von der Senkrechten zu der Glasoberfläche abweichenden Winkel solche Sacklöcher einzubringen.

Die nachfolgenden Beispiele sind angegeben, um die Erfindung weiter zu erläutern, ohne sie dadurch einzuschränken.

### Beispiele

### Beispiel 1

Eine Kunststofflinse wird mit einem härtenden Silikonlack und anschließend mit einer 5 µm dicken wasseraufnehmenden Polymerschicht mit Antifog

Eigenschaften (z.B. AF-100^{™}, Sci Cron Technologies oder Crystal-Coat AF 1140, SDC Technology Inc.) im Tauchverfahren beschichtet. Mittels plasmaionengestütztem Aufdampfen wird auf dieser Oberfläche eine Antireflexbeschichtung abgeschieden, die z.B. aus 4 Schichten SiO₂/TiO₂ besteht und eine Gesamtdicke von 250 µm aufweist. Aufgrund der Herstellungsbedingungen mit Verdichtung der Schicht durch Ionen weist die Schicht eine hohe Abriebfestigkeit und eine natürliche Porosität von weniger als 20% auf. In diese Oberfläche werden mit Hilfe eines Femtosekundenlasers (Wellenlänge: 800 nm, Pulsdauer: 120 fs) Sacklöcher mit einem Durchmesser von < 2 µm in einem Abstand von 20 µm bis 200 µm eingebracht (vgl. die Figuren 1 und 2). Die für das Auge nicht sichtbaren Löcher enden dabei in einer Tiefe von mehreren Mikrometern innerhalb der wasseraufnehmenden Schicht (Antifog-Schicht) (vgl. Figur 1). Die so hergestellte Oberfläche ist in ihrer ursprünglichen Oberfläche kaum beeinträchtigt, da die Löcher weniger als 5% der Oberfläche einnehmen. Die Probe bleibt bei Durchführung eines Antifog-Tests beschlagfrei, da das kondensierende Wasser durch die erzeugten Sacklöcher nach innen geleitet wird und von der wasseraufnehmenden Antifog-Schicht absorbiert wird. Der Antifog-Test wird gemäß DIN EN 168:2001, Abschnitt 16 "Prüfung der Beständigkeit von Sichtscheiben gegen Beschlagen", durchgeführt.

### Beispiel 2 (kein Beispiel der Erfindung)

Eine Kunststofflinse wird mit einem härtenden Silikonlack (Dicke: 3 bis 12 µm) und anschließend im Vakuumprozess mit einem harten Antireflexschichtsystem (Dicke: 180 bis 1500 nm) beschichtet. Mittels eines Femtosekundenlasers werden in einem Abstand von mindestens etwa 20 µm Sacklöcher mit einem Durchmesser von weniger als 1 µm senkrecht zu der Glasoberfläche, ausgehend von der Seite der Antireflexbeschichtung, erzeugt, so daß diese nicht für das Auge sichtbar sind. Bei Überschreiten des Taupunktes an der Oberfläche wird nun das kondensierende Wasser aufgrund des Kapillareffekts in die Sacklöcher hineingezogen. Die Probe bleibt beschlagfrei, solange die Sacklöcher nicht vollständig mit Wasser gefüllt sind.

### Beispiel 3

Eine Kunststofflinse wird mit einem härtenden Silikonlack, anschließend mit einem Antifog-Lack (analog zu Beispiel 1) als der wasseraufnehmenden Schicht und danach wieder mit dem härtenden Silikonlack beschichtet. Auf diese Oberfläche wird im Vakuumprozeß ein Antireflex-Schichtsystem aufgebracht. Die Silikonlackschicht zwischen dem wasseraufnehmenden Polymer und der Antireflexschicht bewirkt einen Übergang der mechanischen Eigenschaften von dem sehr weichen Antifogmaterial zu der sehr harten Antireflexschicht und dient außerdem der Haftvermittlung. Die Sacklöcher bzw. Kanäle werden so eingebracht, daß sie innerhalb des wasseraufnehmenden Polymers enden.

## Patentansprüche

1. optisches Element oder Bauteil, umfassend in der nachfolgenden Reihenfolge ein Glassubstrat (1), eine wasseraufnehmende erste Schicht (3) und eine zweite Schicht (4), bestehend aus einer Antireflexbeschichtung,
**dadurch gekennzeichnet, daß** in die zweite Schicht (4) und die wasseraufnehmende erste Schicht (3) Sacklöcher (5) eingebracht sind, welche ausgehend von der zweiten Schicht (4) eingebracht sind und die zweite Schicht (4) vollständig durchdringen und zumindest teilweise in die wasseraufnehmende erste Schicht (3) eindringen, wobei die Antirefiexbeschichtung (4) derart augebracht ist, daß eine verdichtete Schicht mit einer Porosität von weniger als 20% gebildet wird.

2. Optisches Element oder Bauteil nach Anspruch 1, wobei die Sacklöcher (5) einen Durchmesser in einem Bereich von 0,1 µm bis 10 µm aufweisen.

3. Optisches Element oder Bauteil nach Anspruch 1 oder 2, wobei die Sacklöcher (5), bezogen auf die Oberfläche der zweiten Schicht, einen Abstand von 20 µm bis 1 mm zueinander aufweisen.

4. Optisches Element oder Bauteil nach einem der Ansprüche 1 bis 3, wobei die Sacklöcher (5) weniger als 30% der Oberfläche der zweiten Schicht einnehmen.

5. Optisches Element oder Bauteil nach einem der Ansprüche 1 bis 4, wobei die Sacklöcher (5) im wesentlichen senkrecht zu der Oberfläche vorgesehen sind.

6. Optisches Element oder Bauteil nach einem der Ansprüche 1 bis 5, wobei zwischen dem Glassubstrat (1) und der wasseraufnehmenden Schicht (3) und/oder zwischen der wasseraufnehmenden Schicht (3) und der Antireflexbeschichtung (4) als der zweiten Schicht weiter eine Hartschicht (2, 2a) vorgesehen ist.

7. Optisches Element oder Bauteil nach Anspruch 6, umfassend folgende Schichtaufbauanordnung:
Glassubstrat/Hartschicht/wasseraufnehmende Schicht/Antireflexbeschichtung bzw.
Gtassubstrat/wasseraufnehmende Schicht/Hartschicht/Antireflexbeschichtung bzw.
Glassubstrat/Hartschicht/wasseraufnehmende Schicht/Hartschicht/Antireflexbeschichtung.

8. Optisches Element oder Bauteil nach einem der Ansprüche 1 bis 7, wobei auf der zweiten Schicht (4) weiter eine hydrophobe und/oder oleophobe Beschichtung angeordnet ist.

9. Optisches Element oder Bauteil nach einem der Ansprüche 1 bis 8, wobei die wasseraufnehmende Schicht (3) eine wasseraufnehmende Polymerschicht ist.

10. Optisches Element oder Bauteil nach einem der Ansprüche 1 bis 9, wobei das Glassubstrat (1) aus einem Kunststoff oder einem anorganischen Material aufgebaut ist.

11. Verfahren zur Herstellung eines optischen Elements oder Bauteils, umfassend in der nachfolgenden Reihenfolge die Schritte:
(a) Bereitstellen eines Glassubstrats (1),
(b) Aufbringen einer wasseraufnehmenden Schicht (3),
(c) Aufbringen einer zweiten Schicht (4), bestehend aus einer Antireflexbeschichtung,
**dadurch gekennzeichnet, daß** es weiter umfasst:
(d) derartiges bereichsweises Einbringen von Sacklöchern bzw. Kanälen (5) in die zweite Schicht (4) und in die wasseraufnehmende Schicht (3), daß die zweite Schicht (4) vollständig durchdrungen wird und die Sacklöcher (5) zumindest teilweise in die wasseraufnehmende Schicht (3) eindringen, und wobei die Antireflexbeschichtung (4) derart aufgebracht wird, daß eine verdichtete Schicht mit einer Porosität von weniger als 20% gebildet wird.

12. Verfahren nach Anspruch 11, wobei zwischen dem Glassubstrat (1) und der wasseraufnehmenden Schicht (3) und/oder zwischen der wasseraufnehmenden Schicht (3) rund der Antireflexbeschichtung (4) weiter eine Hartschicht (2, 2a) vorgesehen wird.

13. Verfahren nach Anspruch 11 oder 12, wobei auf die zweite Schicht (4) weiter eine hydrophobe und/oder oleophobe Beschichtung aufgebracht wird.

14. Verfahren nach einem der Ansprüche 11 bis 13, wobei die Sacklöcher (5) durch Laserbeschuß, Sandstrahlbehandlung, Elektronenstrahl-Lithographie, Ionenstrahl-Bearbeitung, Ultraschallbeschuß oder einen Wasserstrahl in die zweite Schicht (4) und gegebenenfalls die vorstehend definierte, hydrophobe und/oder oleophobe Beschichtung sowie zumindestens teilweise in die wasseraufnehmende Schicht (3) eingebracht werden.

15. Verfahren nach einem der Ansprüche 11 bis 14, wobei die Sacklöcher (5) im wesentlichen senkrecht zu der Oberfläche vorgesehen werden.

## Claims

1. Optical element or component, comprising in the following order a glass substrate (1), a water-absorbent first layer (3) and a second layer (4) consisting of an antireflective coating,
**characterised in that** inserted into the second layer (4) and the water-absorbent first layer (3) are blind holes (5), which are inserted from the second layer (4) and completely penetrate the second layer (4) and penetrate at least partially into the water-absorbent layer (3), wherein the antireflective coating (4) is applied in such a manner that a compressed layer with a porosity of less than 20% is formed.

2. Optical element or component according to claim 1, wherein the blind holes (5) have a diameter in the range of 0.1 µm to 10 µm.

3. Optical element or component according to claim 1 or 2, wherein the blind holes (5) have a spacing of 20 µm to 1 mm from one another in relation to the surface of the second layer.

4. Optical element or component according to one of claims 1 to 3, wherein the blind holes (5) occupy less than 30% of the surface of the second layer.

5. Optical element or component according to one of claims 1 to 4, wherein the blind holes (5) are provided to be substantially perpendicular to the surface.

6. Optical element or component according to one of claims 1 to 5, wherein a hard layer (2, 2a) is additionally provided between the glass substrate (1) and the water-absorbent layer (3) and/or between the water-absorbent layer (3) and the antireflective coating (4) as second layer.

7. Optical element or component according to claim 6, comprising the following layer structure arrangement:
glass substrate/hard layer/water-absorbent layer/antireflective coating or
glass substrate/water-absorbent layer/hard layer/antireflective coating or
glass substrate/hard layer/water-absorbent layer/hard layer/antireflective coating.

8. Optical element or component according to one of claims 1 to 7, wherein a hydrophobic and/or oleophobic coating is additionally arranged on the second layer (4).

9. Optical element or component according to one of claims 1 to 8, wherein the water-absorbent layer (3) is a water-absorbent polymer layer.

10. Optical element or component according to one of claims 1 to 9, wherein the glass substrate (1) is made from a plastic or an inorganic material.

11. Method for producing an optical element or component, comprising the steps in the following sequence:
(a) providing a glass substrate (1),
(b) applying a water-absorbent layer (3),
(c) applying a second layer (4) consisting of an antireflective coating, **characterised in that** it additionally comprises:
(d) insertion of blind holes of channels (5) in sections into the second layer (4) and into the water-absorbent layer (3) in such a manner that the second layer (4) is penetrated completely and such that the blind holes (5) penetrate at least partially into the water-absorbent layer (3),
and wherein the antireflective coating (4) is applied in such a manner that a compressed layer with a porosity of less than 20% is formed.

12. Method according to claim 11, wherein a hard layer (2, 2a) is additionally provided between the glass substrate (1) and the water-absorbent layer (3) and/or between the water-absorbent layer (3) and the antireflective coating (4).

13. Method according to claim 11 or 12, wherein a hydrophobic and/or oleophobic coating is additionally applied to the second layer (4).

14. Method according to one of claims 11 to 13, wherein the blind holes (5) are inserted into the second layer (4) and, if necessary, the above-defined hydrophobic and/or oleophobic coating as well as at least partially into the water-absorbent layer (3) by laser bombardment, sandblasting treatment, electron-beam lithography, ion-beam machining, ultrasound bombardment or a water jet.

15. Method according to one of claims 11 to 14, wherein the blind holes (5) are provided to be substantially perpendicular to the surface.

## Revendications

1. Elément ou composant optique comportant dans l'ordre suivant, un substrat de verre (1), une première couche (3) absorbant l'eau et une seconde couche (4) se composant d'un revêtement antireflet,
**caractérisé en ce que** des trous borgnes (5) sont réalisés dans la seconde couche (4) et la première couche absorbant l'eau, lesquels sont réalisés en partant de la seconde couche (4) et la traversent complètement et pénètrent au moins en partie dans la première couche absorbant l'eau (3), le revêtement antireflet (4) étant appliqué de telle manière qu'une couche comprimée avec une porosité inférieure à 20 % soit formée.

2. Elément ou composant optique selon la revendication 1, les trous borgnes (5) présentant un diamètre compris dans la plage entre 0,1 µm et 10 µm.

3. Elément ou composant optique selon la revendication 1 ou 2, les trous borgnes (5) présentant, par rapport à la surface de la seconde couche, une distance comprise entre 20 µm et 1 mm.

4. Elément ou composant optique selon l'une quelconque des revendications 1 à 3, les trous borgnes (5) occupant moins de 30 % de la surface de la seconde couche.

5. Elément ou composant optique selon l'une quelconque des revendications 1 à 4, les trous bornes (5) étant prévus essentiellement perpendiculairement à la surface.

6. Elément ou composant optique selon l'une quelconque des revendications 1 à 5, une couche dure (2, 2a) étant de plus prévue entre le substrat de verre (1) et la couche absorbant l'eau (3) et/ou entre la couche absorbant l'eau (3) et le revêtement antireflet (4) comme seconde couche.

7. Elément ou composant optique selon la revendication 6, comprenant l'agencement structurel en couches suivant :
substrat de verre/couche dure/couche absorbant l'eau/revêtement antireflet ou
substrat de verre/couche absorbant l'eau/couche dure/revêtement antireflet ou
substrat de verre/couche dure/couche absorbant l'eau/couche dure/revêtement antireflet.

8. Elément ou composant optique selon l'une quelconque des revendications 1 à 7, un revêtement hydrophobe et/ou oléophobe étant en outre disposé sur la seconde couche (4).

9. Elément ou composant optique selon l'une quelconque des revendications 1 à 8, la couche absorbant l'eau (3) étant une couche de polymère absorbant l'eau.

10. Elément ou composant optique selon l'une quelconque des revendications 1 à 9, le substrat de verre (1) étant constitué d'une matière plastique ou d'un matériau anorganique.

11. Procédé de fabrication d'un élément ou composant optique comportant les étapes dans l'ordre suivant :
(a) la mise à disposition d'un substrat de verre (1),
(b) l'application d'une couche absorbant l'eau (3)
(c) l'application d'une seconde couche (4) se composant d'un revêtement antireflet,
**caractérisé en ce qu'**il comporte en outre :
(d) la réalisation par endroits de trous borgnes ou de canaux (5) dans la seconde couche (4) et dans la couche absorbant l'eau (3) de telle manière que la seconde couche (4) soit complètement traversée et les trous oblongs (5) pénètrent au moins en partie dans la couche absorbant l'eau (3),
et le revêtement antireflet (4) étant appliqué de telle manière qu'une couche comprimée avec une porosité inférieure à 20 % soit formée.

12. Procédé selon la revendication 11, une couche dure (2, 2a) étant de plus prévue entre le substrat de verre (1) et la couche absorbant l'eau (3) et/ou entre la couche absorbant l'eau (3) et le revêtement antireflet (4).

13. Procédé selon la revendication 11 ou 12, un revêtement hydrophobe et/ou oléophobe étant en outre appliqué sur la seconde couche (4).

14. Procédé selon l'une quelconque des revendications 11 à 13, les trous borgnes (5) étant réalisés par bombardement laser, sablage, lithographie à faisceau électronique, traitement à faisceau ionique, bombardement à ultrasons ou jet d'eau dans la seconde couche (4) et éventuellement dans le revêtement défini précédemment, hydrophobe et/ou oléophobe ainsi qu'au moins en partie dans la couche absorbant l'eau (3).

15. Procédé selon l'une quelconque des revendications 11 à 14, les trous borgnes (5) étant prévus essentiellement perpendiculairement à la surface.
